Europäisches Patentamt

European Patent Office

Office européen des brevets

(11) Numéro de publication: **0 426 571 A1**

# DEMANDE DE BREVET EUROPEEN

(21) Numéro de dépôt: 90403093.9

(51) Int. Cl.⁵: **G02B 21/00**, G01N 21/59

(22) Date de dépôt: **31.10.90**

(30) Priorité: **03.11.89 FR 8914425**

(43) Date de publication de la demande:
**08.05.91 Bulletin 91/19**

(84) Etats contractants désignés:
**AT BE CH DE DK ES FR GB GR IT LI LU NL SE**

(71) Demandeur: **SPIRAL - RECHERCHE ET DEVELOPPEMENT (SARL)**
**3, rue des Mardors**
**F-21560 Couternon(FR)**

(72) Inventeur: **De Fornel, Frédérique**
**16, rue du Recteur Bouchard**
**F-21000 Dijon(FR)**
Inventeur: **Goudonnet, Jean-Pierre**
**12F, rue Isabelle du Portugal**
**F-21000 Dijon(FR)**

(74) Mandataire: **Bruder, Michel et al**
**Cabinet Michel Bruder Conseil en Brevets**
**10, rue de la Pépinière**
**F-75008 Paris(FR)**

(54) **Procédé d'analyse spectroscopique ponctuelle de la lumière diffractée ou absorbée par une substance placée dans un champ proche.**

(57) La présente invention concerne un procédé d'analyse spectroscopique ponctuelle de la lumière diffractée ou absorbée par une substance transparente et/ou réfléchissante, placée dans un champ proche, généré en transmission ou en réflexion par un premier rayonnement électromagnétique, caractérisé en ce qu'on effectue une analyse spectroscopique ponctuelle dudit champ proche et/ou d'un second rayonnement électromagnétique, orienté simultanément avec ledit premier rayonnement sur ladite substance, ladite analyse concernant la fraction dudit champ proche ou dudit second rayonnement électromagnétique ayant interagi avec ladite substance.

La présente invention est plus particulièrement destinée à l'étude spectroscopique à haute résolution de substances transparentes et/ou réfléchissantes dont on relève simultanément le profil optique, ou le profil géométrique, au moyen d'un microscope optique à balayage en champ proche, tel qu'un microscope par transmission en champ évanescent frustré, ou un microscope par réflexion en champ proche guidé.

Fig 8

La présente invention concerne un procédé d'analyse spectroscopique ponctuelle de la lumière diffractée ou absorbée par une substance placée dans un champ proche, ainsi que des microscopes optiques à balayage en champ proche mettant en oeuvre ce procédé.

Les techniques d'analyse spectroscopique d'un rayonnement électromagnétique dirigé sur une substance à étudier dépendent pour beaucoup de sa longueur d'onde. Egalement, selon qu'on désire étudier une substance organique ou une substance inorganique, les techniques changent et l'interprétation des résultats est différente. Néanmoins, dans toutes les techniques spectroscopiques connues à ce jour par le déposant de la présente demande de brevet, aucune n'associe simultanément la microscopie et la spectroscopie du même objet, avec une résolution pouvant atteindre und dizaine de nanomètres. Tout juste peut-on citer certains perfectionnements de microscopes optiques ou électroniques conventionnels aptes à permettre la localisation de structures particulières à l'intérieur ou à la superficie de la substance à étudier ; on exploite alors, par exemple, les propriétés d'absorption différentielle d'un rayonnement électromagnétique par la substance sur laquelle est dirigé ce rayonnement (microscope optique polarisant, observation en fluorescence ultraviolette, observation sélective de cellules marquées, ...).

On peut également citer, dans le domaine de la microscopie électronique, les procédés de micronanalyse à sonde électronique (microsonde de Castaing principalement) ; cependant, ces derniers procédés sont réservés à l'étude des substances conductrices de l'électricité, ou pouvant être métallisées et placées dans l'ultravide (études métallographiques, ou détection de concrétions minérales dans des cellules mortes).

En l'espèce, lorsqu'une substance n'est pas métallisable, ou qu'on désire l'étudier "in vivo", ni la microscopie électronique, ni la microscopie optique, ni aucune technique spectroscopique ne permettent de connaître ponctuellement, c'est-à-dire avec und grande précision, et simultanément : la topographie, les propriétés optiques (échantillons biologiques ou minces) et les propriétés spectroscopiques de cette substance.

La présente invention vise à remédier à ces inconvénients en proposant un procédé d'analyse spectroscopique de substances transparentes ou réfléchissantes, complétant efficacement la microscopie optique simultanée de ces substances, spectroscopie et microscopie pouvant s'effectuer avec une résolution d'une dizaine de nanomètres.

Par la suite, on entendra par "substance transparents" toute substance qui est transparente dans le domaine spectral considéré, et par "substance réfléchissante" toute substance dont une surface est réfléchissante dans le domaine spectral considéré.

L'invention concerne ainsi un procédé d'analyse spectroscopique ponctuelle de la lumière diffractée ou absorbée par une substance transparente et/ou réfléchissante, placée dans un champ proche, généré en transmission ou en réflexion par un premier rayonnement électromagnétique, caractérisé en ce qu'on effectue une analyse spectroscopique ponctuelle dudit champ proche et/ou d'un second rayonnement électromagnétique, orienté simultanément avec ledit premier rayonnement sur ladite substance, ladite analyse concernant la fraction dudit champ proche ou dudit second rayonnement électromagnétique ayant interagi avec ladite substance.

Par ailleurs, on peut utiliser ledit champ proche pour établir, par microscopie à balayage en champ proche, le profil géométrique et/ou le profil optique de ladite substance.

L'objectif principal de la présente invention est, ainsi, de procurer un moyen pour analyser ponctuellement une substance dont on est en train, par ailleurs, de relever, par réflexion, le profil géométrique, et/ou de relever, par transmission, le profil optique (ce qui revient à déterminer le chemin optique ponctuel, égal au produit de l'épaisseur et de l'indice de réfraction optique).

Il est rappelé que l'expression "champ proche" caractérise le comportement d'un champ électromagnétique au voisinage d'un obstacle se trouvant sur son trajet, c'est-à-dire à une distance inférieure à une dizaine de fois sa longueur d'onde. L'obstacle peut être sa source, une ouverture, une surface, ..., le comportement en "champ proche" s'observant, ainsi, aussi bien en transmission qu'en réflexion.

Conformément à une première exécution de procédé, objet de l'invention, l'analyse spectroscopique porte sur le premier rayonnement électromagnétique, générant, par réflexion ou par transmission, un champ proche, qui sert, par ailleurs, à effectuer une microscopie optique à balayage en champ proche de la substance soumise à l'étude.

Suivant une première variante de cette exécution dudit procédé, le champ proche est un champ évanescent frustré, généré ponctuellement par la présence d'une sonde optique transparente, du type de l'extrémité d'une fibre optique, dans un champ évanescent qui résulte, pour sa part, de la réflexion interne totale d'un premier rayonnement électromagnétique sur une face d'un corps transparent, du type d'un prisme.

Suivant une deuxième variante de cette exécution dudit procédé, le champ proche est un champ proche guidé en réflexion, généré par la réflexion d'un premier rayonnement électromagnétique issu de l'extrémité d'un guide d'onde, du type d'une fibre optique, sur une surface réfléchissante, le rayonnement réfléchi étant capté, en retour, par ladite extrémité, et se propageant alors également dans ledit guide d'onde.

Ces deux variantes sont, bien entendu, exclusives l'une par rapport à l'autre, et se rapportent, pour la première, à la microscopie en champ évanescent frustré par transmission, et, pour la seconde, à la microscopie en champ proche guidé par réflexion. On rappellera plus loin les principes de ces deux types de microscopie optique à balayage, et on comprendra alors tous les avantages que procure une analyse spectroscopique simultanée des rayonnements électromagnétiques servant à ces microscopies.

Conformément à une deuxième exécution du procédé, objet de l'invention, l'analyse spectroscopique porte sur un rayonnement électromagnétique complexe, orienté sur la substance transparente et/ou réfléchissante à analyser, en même temps que le premier rayonnement électromagnétique, générant, par réflexion ou par transmission, un champ proche. Ce champ proche sert, par ailleurs, à effectuer une microscopie optique à balayage, en transmission ou en réflexion, de ladite substance.

Suivant une première variante de cette exécution dudit procédé, on oriente le rayonnement électromagnétique complexe sur la substance transparente et/ou réfléchissante à analyser, de manière à ce que ledit rayonnement complexe ne présente pas la structure d'un champ proche.

Plusieurs cas sont, à ce titre, envisageables dans cette première variante, selon que la substance à étudier est transparente, réfléchissante, ou les deux à la fois : on pourra alors procéder à son analyse spectroscopique en transmission, et/ou en réflexion, d'une part, et opérer simultanément sa microscopie optique en champ proche, par transmission ou par réflexion, d'autre part.

Suivant une deuxième variante de cette deuxième exécution dudit procédé, on oriente le rayonnement électromagnétique complexe sur la substance transparente et/ou réfléchissante à analyser, de manière à ce que ledit rayonnement complexe présente la structure d'un champ proche.

En outre, il existe deux sous-variantes de cette deuxième variante :

- Le champ proche est un champ évanescent frustré, généré, en transmission, au travers d'une substance au moins transparente : l'analyse spectroscopique ponctuelle est donc opérée en transmission.

- Le champ proche est un champ proche guidé, généré, en réflexion, sur une substance au moins réfléchissante : l'analyse spectroscopique ponctuelle est donc opérée en réflexion.

Dans ces deux sous-variantes, la microscopie optique à balayage en champ proche de la substance peut s'effectuer par transmission - en champ évanescent frustré - ou, par réflexion - en champ proche guidé -, selon que cette substance est au moins transparente, ou au moins réfléchissante. Par conséquent, les deux microscopies sont indifféremment envisageables chaque fois que la substance soumise à l'étude est transparente et réfléchissante : il s'agit d'une situation courante pour ce qui concerne l'étude des verres ou des échantillons biologiques.

On a choisi de rappeler, tout d'abord, le principe de la microscopie optique à balayage par transmission, c'est-à-dire en champ évanescent frustré. Ce rappel permettra de mettre en évidence les avantages d'une analyse spectroscopique ponctuelle, portant sur un champ évanescent frustré.

On rappellera ensuite le principe de la microscopie optique à balayage par réflexion en champ proche guidé. Les avantages d'une analyse spectroscopique ponctuelle, portant sur un champ proche guidé, ressortiront alors mieux de cet exposé.

Il est donc rappelé, dans un premier temps, le principe de la microscopie optique à balayage en champ évanescent frustré, dont on trouve par exemple un exposé dans un article en langue anglaise, paru le 1er janvier 1989 dans Physical Review B, Volume 39, number 1, pages 767-770 :

- On dirige un faisceau de lumière monochromatique sur le dessous d'une face d'un corps transparent, par exemple un prisme (on entend par "corps transparent" un corps transparent dans le domaine spectral considéré). L'angle d'incidence de ce faisceau est choisi supérieur à l'angle critique caractérisant l'interface entre ce corps transparent, d'indice de réfraction optique $n1$, et le milieu extérieur, d'indice de réfraction optique $n2$ ; de cette manière, le faisceau lumineux subit une réflexion interne totale, et génère, sur le dessus de ladite face, un champ évanescent (ce champ transportant donc une énergie moyenne nulle dans le temps).

- Une sonde optique, du type de l'extrémité amincie d'une fibre optique, est placée au dessus de ladite face ; cette extrémité se présente en général comme une pointe fine, mais on verra par la suite que cette configuration n'est par limitative. En raison de la présence de la sonde optique dans le champ évanescent, une onde électromagnétique d'énergie moyenne non nulle peut passer du corps transparent vers ladite sonde, et être détectée à l'extrémité opposée de la fibre optique : il est habituel de dire que la sonde vient "frustrer" le champ évanescent, et de parler du champ comme d'un champ évanescent frustré. L'intensité d'un tel champ variant exponentiellement avec la distance séparant la sonde de la face du prisme, on peut, soit effectuer une mesure très précise de cette distance par extrapolation directe de l'intensité détectée, soit maintenir la sonde à une distance constante de ladite face au moyen d'une contre-réaction très sensible agissant sur cette intensité.

- Si on place alors une substance transparente dans le champ évanescent frustré, c'est-à-dire sur la face où se produit la réflexion totale du faisceau de lumière, le profil optique de cette substance va modifier en chaque point la structure de l'onde évanescente transmise à la sonde : le front de l'onde évanescente est donc modulé spatialement. En faisant balayer latéralement la substance transparente par ladite sonde - dont les mouvements dans les trois directions de l'espace sont enregistrés -, on établit sa topographie optique (correspondant à son profil optique). Les résolutions latérale et verticale peuvent atteindre une dizaine de nanomètres.

- Enfin, si on veut connaître l'épaisseur ou l'indice de réfraction séparement, il est nécessaire d'effectuer une mesure complémentaire visant à discriminer dans l'image la part de signal dû à l'une et la part de signal dû à l'autre ; on pourra suivre, à cet effect, les enseignements d'une autre demande de brevet française n°89-14 289, déposée le 31 octobre 1989 au nom du même demandeur, et intitulée "SPECTROSCOPIE DISCRIMINANTE DU PROFIL OPTIQUE D'UN OBJET TRANSPARENT, OBTENU PAR MICROSCOPIE OPTIQUE A BALAYAGE EN CHAMP EVANESCENT, ET MICROSCOPES OPTIQUES A BALAYAGE EN CHAMP EVANESCENT METTANT EN OEUVRE LEDIT PROCEDE".

Il ressort bien qu'une telle microscopie est apte à fournir des informations topographiques et optiques ponctuelles concernant une substance transparente. Suivant la présente invention, on peut utiliser la sonde optique, du type de l'extrémité amincie d'une fibre optique, pour prélever, en outre, une information spectroscopique ponctuelle de ladite substance. Deux cas sont, à ce titre, envisageables :

a) soit on analyse directement le rayonnement capté par la sonde optique au fur et à mesure qu'elle balaye la surface de la substance soumise à l'étude. Ce rayonnement, du type d'un champ évanescent frustré, est plus intense qu'un simple rayonnement évanescent, et on peut l'étudier au moyen d'un analyseur de spectres conventionnel. Par ailleurs, bien que la longueur d'onde de ce champ évanescent frustré ne soit pas nécessairement bien adaptée au type de spectroscopie qu'on désire réaliser (généralement, pour faire fonctionner un microscope à balayage en champ évanescent frustré, on utilise le rayonnement émis par un laser hélium-néon émittant à 6328 angstroems, car une telle source de lumière est courante et peu coûteuse), l'information spectroscopique obtenue dans de telles conditions permet de détecter certaines des disparités ponctuelles d'une substance transparente composite.

b) soit on analyse un rayonnement électromagnétique complexe orienté simultanément avec le premier rayonnement sur la substance transparente dont on est en train de relever le profil optique. Plusieurs analyses sont d'ailleurs possibles suivant la nature du rayonnement électromagnétique utilisé, et les informations que l'on peut obtenir concernant la substance dépendent ainsi des longueurs d'onde des composantes spectrales de ce rayonnement : les procédés d'analyse spectroscopique adaptés à chaque rayonnement sont connus en soi, et le but de la présente invention n'est pas de les décrire tous dans cette application particulière. On comprend, en outre, qu'il est avantageux que ledit rayonnement électromagnétique complexe présente la structure d'un champ évanescent complexe frustré. La situation contraire d'un champ complexe non évanescent sera décrite plus loin.

L'avantage tout à fait inattendu de ces variantes en transmission des exécutions du procédé d'analyse spectroscopique ponctuelle, objet de l'invention, résulte principalement de la nature évanescente du rayonnement qui est analysé, ainsi que de la façon dont celui-ci est "frustré" par la sonde optique. En effet, suivant une caractéristique connue et essentielle de la mise en oeuvre d'un microscope optique en champ évanescent frustré, la quasi-totalité du rayonnement arrivant sur la sonde optique est prélevée par sa partie la plus extrême. Ceci est une conséquence de la structure d'un champ évanescent frustré, dont on sait qu'il décroit exponentiellement avec la distance de la sonde optique à la surface de la substance transparente à analyser, ou avec la distance de ladite sonde optique à la surface du corps transparent sur lequel repose ladite substance.

Ainsi, dans le cas connu où la sonde optique est une pointe fine transparente, et en admettant de manière réaliste que celle-ci présente un profil sphérique de rayon R à son extrémité, la calotte sphérique de rayon R/10 prélève 90% du rayonnement. Ceci signifie que, bien que la pointe soit parfaitement transparente et non recouverte d'un dépôt opaque visant à y délimiter une ouverture microscopique, l'angle solide sous lequel cette pointe prélève le champ évanescent est de faible étendue : il s'agit donc d'une sonde optique très directive.

Dans le cas, non pratiqué jusqu'à la date de la présente invention, où la sonde optique n'est pas une pointe fine transparente, mais est constituée de l'extrémité d'une fibre optique présentant un coeur de petit diamètre, la surface d'intégration du champ évanescent frustré est également faible.

Comme, par ailleurs, les phénomènes de diffraction sont moindres, la sonde optique est aussi très directive. Ce dernier cas sera d'ailleurs repris dans les variantes en réflexion des exécutions du procédé d'analyse spectroscopique ponctuelle conforme à l'invention ; on verra alors d'autres avantages d'une telle configuration.

De la même façon que la microscopie, une spectroscopie en champ proche mise en oeuvre en transmission peut donc être très directive ; cette caractéristique est tout à fait nouvelle, car les techniques spectroscopiques actuelles utilisent au mieux des fentes, ou des orifices microscopiques, de nature diffractante.

Il est maintenant rappelé le principe de la microscopie optique à balayage par réflexion en champ proche guidé, dont on trouve un exposé dans la demande de brevet française 89-11 297 déposée le 28 août 1989 au nom du même demandeur sous le titre "MICROSCOPE EN CHAMP PROCHE EN REFLEXION UTILISANT UN GUIDE D'ONDES COMME SONDE DE CE CHAMP".

- Un rayonnement électromagnétique, issu d'une source favorablement monochromatique, se propage dans un guide d'one, du type d'une fibre optique. A proximité de la sortie de l'extrémité de ce guide d'onde, son comportement demeure celui d'un rayonnement guidé, et sa structure est, par conséquent, conforme à celle d'un mode propre de propagation.

- Hormis un phénomène d'étalement dû à sa propagation dans l'air, ce rayonnement conserve, après sa réflexion sur une surface réfléchissante, la structure d'un mode propre de propagation. On peut parler d'un mode de propagation guidé étalé.

- Le rayonnement électromagnétique réfléchi par ladite surface est prélevé, en retour, par l'extrémité du guide d'onde, appelée par la suite "sonde optique". Cette sonde optique peut être pouctuelle, mais il s'agit généralement de l'extrémité étirée d'une fibre optique : à cet effet, on connait un procédé de fusion/étirage permettant d'obtenir une fibre optique dont l'extrémité présente un coeur de petit diamètre (typiquement 500 nanomètres).

- Le rayonnement réfléchi prélevé par la sonde optique se propage alors à nouveau dans le guide d'onde. Son comportement résulte, par conséquent, du couplage électromagnétique qui s'établit entre le mode de propagation guidé étalé couplé, et le mode propre de propagation dudit guide. On a démontré que l'intensité d'un rayonnement présentant une telle structure décroit très vite avec la distance de l'extrémité de la sonde optique à la surface réfléchissante. Il existe donc une zone de champ proche, et le champ résultant de ce comportement particulier d'un rayonnement électromagnétique, deux fois couplé à un guide d'onde, est appelé pour cette raison "champ proche guidé en réflexion". On notera, par ailleurs, que ce champ n'est pas évanescent, car, au-delà de ladite zone de champ proche, il se propage conformément aux lois classiques et connues de la diffraction.

- L'intensité d'un tel champ varie rapidement avec la distance séparant la sonde optique de la surface de la substance réfléchissante (dans les cas les plus favorables, cette variation est sensiblement exponentielle). On peut donc, soit effectuer une mesure très précise de cette distance par extrapolation directe de l'intensité détectée, soit asservir la position verticale de ladite sonde de manière à procurer un fonctionnement à intensité constante.

- En faisant alors balayer latéralement la substance réfléchissante par la sonde - dont les mouvements dans les trois directions de l'espace sont enregistrés -, on établit sa topographie géométrique. La résolution latérale peut atteindre quelques dizaines de nanomètres, et la résolution verticale quelques nanomètres seulement.

Il ressort ainsi bien que la microscopie optique à balayage par réflexion en champ proche guidé est apte à fournir des informations topographiques ponctuelles concernant une substance réfléchissante.

Suivant le présente invention, on peut utiliser la sonde optique pour prélever, en outre, une information spectroscopique ponctuelle de ladite substance.

On contrôle alors la distance entre cette sonde optique, du type de l'extrémité d'une fibre optique, et la surface d'une substance réfléchissante soumise à l'étude, au moyen d'un microscope à balayage en champ proche.

De cette façon, on peut choisir cette distance de manière à ce qu'un rayonnement électromagnétique issu de l'extrémité d'un guide d'onde, orienté en réflexion sur une surface d'une substance réfléchissante, et prélevé, en retour, par ladite extrémité, pour se propager ensuite à nouveau dans ledit guide d'onde, présente la structure d'un champ proche guidé en réflexion à décroissance rapide.

Par conséquent, une analyse spectroscopique ponctuelle, opérée en réflexion, à partir d'un champ proche guidé, peut être très directive, et bénéficier des résolutions observées en microscopie du même type.

Il est enfin important de noter que cette analyse spectroscopique ponctuelle peut porter aussi bien sur un premier champ électromagnétique servant ,par ailleurs, à la microscopie optique à balayage en champ proche guidé, que sur un champ électromagnétique complexe, orienté, à cet effet, sur la substance réfléchissante soumise à l'étude ; dans cette dernière situation, le comportement en champ proche guidé du rayonnement peut s'observer dans toute son étendue spectrale, pour autant qu'on tienne compte de la dépendance exponentielle de l'intensité d'un tel champ en fonction de sa longueur d'onde.

Par conséquent, il ressort bien que la décroissance rapide de l'intensité d'un champ proche guidé en réflexion procure les mêmes avantages que ceux liés à la décroissance exponentielle de l'intensité d'un champ évanescent frustré en transmission. Ces avantages concernent, non seulement la microscopie en champ proche, mais aussi toute analyse spectroscopique ponctuelle opérée en champ proche : directivité, et donc résolution latérale de l'ordre d'une dizaine à quelques dizaines de nanomètres, simultanéité de la microscopie et de la spectroscopie.

Il est enfin important de noter que l'intensité d'un champ proche dépend de manière rapide, voire exponentielle, de sa longueur d'onde. On verra plus loin le bénéfice que l'on peut tirer de cette caractéristique commune au champ évanescent frustré et au champ proche guidé en réflexion.

D'autres caractéristiques et avantages des exécutions du procédé d'analyse spectroscopique objet de la présente invention ressortiront mieux de la description qui va suivre de plusieurs variantes données à titre d'exemples non limitatifs de ce procédé, ainsi que de plusieurs formes d'éxécution de microscopes optiques à balayage en champ proche mettant en oeuvre les enseignements de ces variantes, en référence aux dessins annexés sur lesquels :

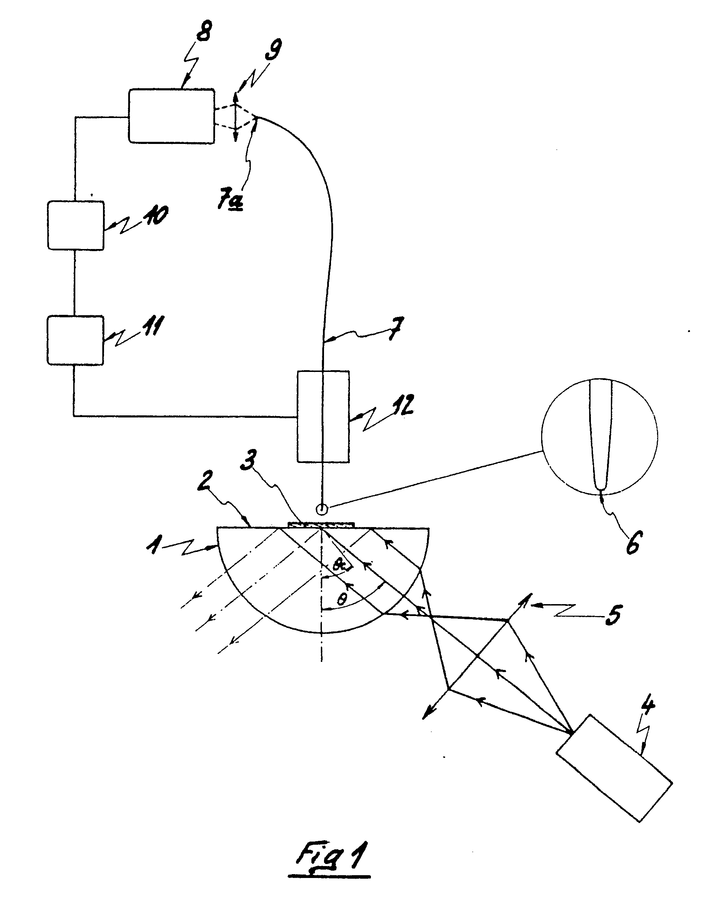

- la figure 1 est une vue schématique d'un microscope optique à balayage par transmission en champ évanescent frustré conventionnel,

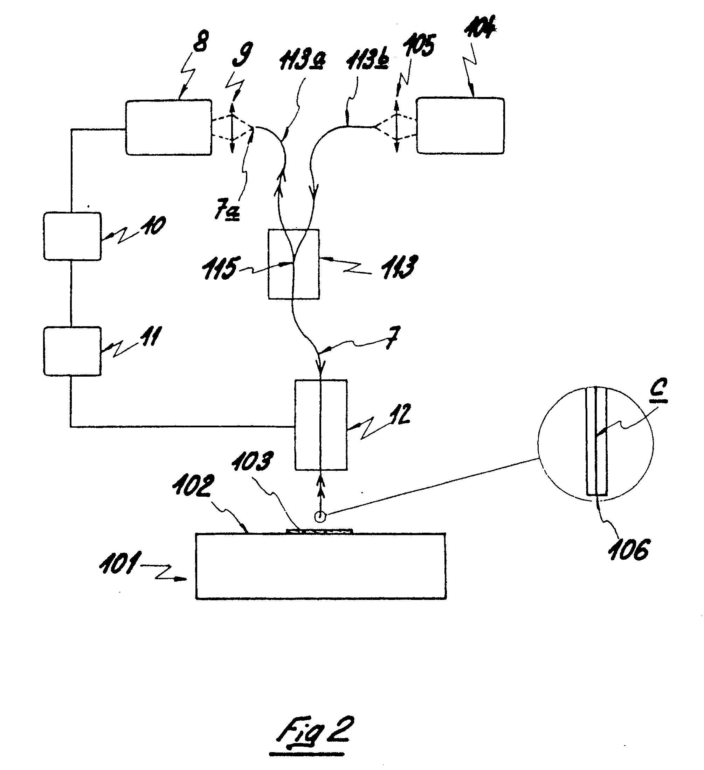

- la figure 2 est une vue schématique d'un microscope optique à balayage par réflexion en champ proche guidé conventionnel,

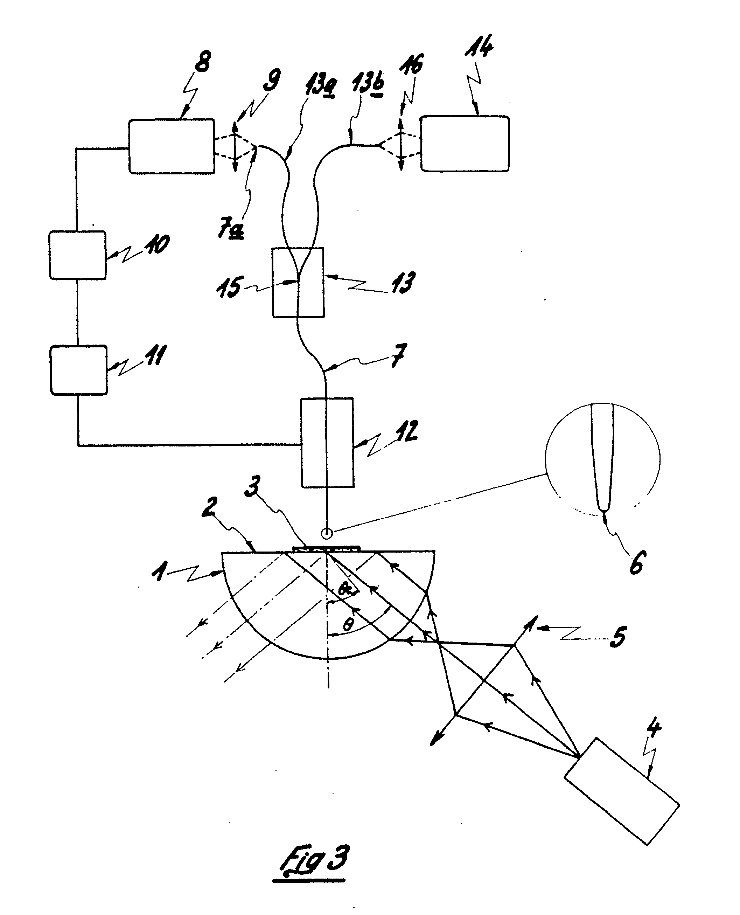

- la figure 3 est une vue schématique d'un première forme d'éxécution d'un microscope optique à balayage en champ évanescent frustré, mettant en oeuvre une première variante de la première exécution du procédé d'analyse spectroscopique ponctuelle objet de l'invention, et comportant notamment un coupleur optique à fibres optiques et un analyseur de spectres,

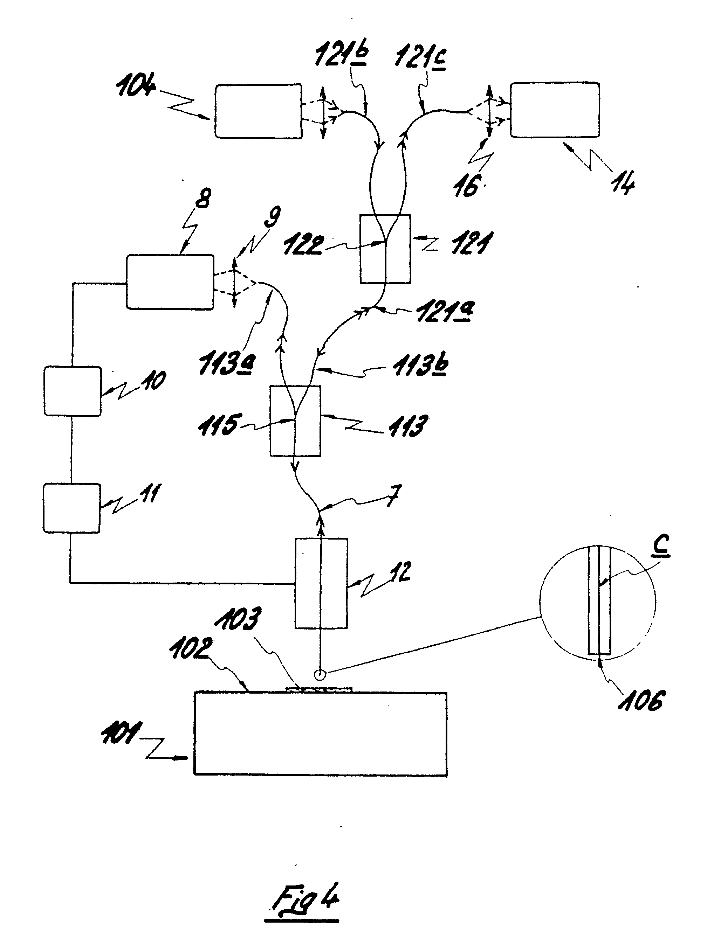

- la figure 4 est une vue schématique d'une première forme d'éxécution d'un microscope optique à balayage en champ proche guidé, mettant en oeuvre une seconde variante de la première exécution du procédé d'analyse spectroscopique ponctuelle objet de l'invention, et comportant notamment deux coupleurs optiques à fibres optiques et un analyseur de spectres.

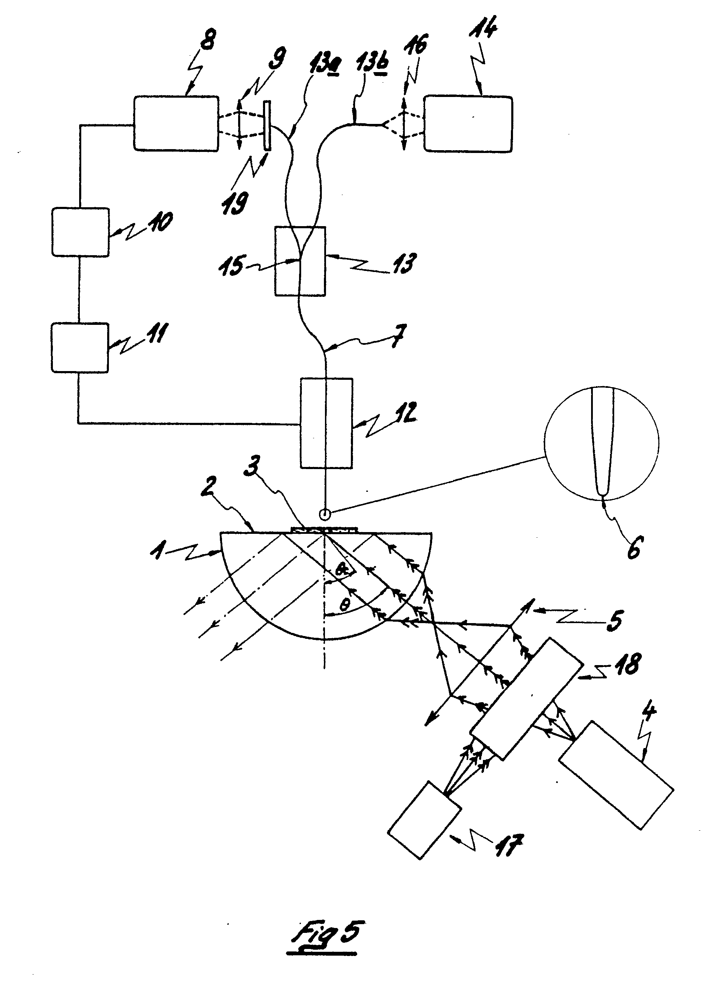

- la figure 5 est une vue schématique d'une deuxième forme d'éxécution d'un microscope optique à balayage en champ évanescent frustré, mettant en oeuvre la première sous-variante de la deuxième variante de la deuxième exécution du procédé d'analyse spectroscopique ponctuelle objet de l'invention, et comportant notamment un coupleur optique à fibres optiques, une source auxilliaire de rayonnement et un analyseur de spectres,

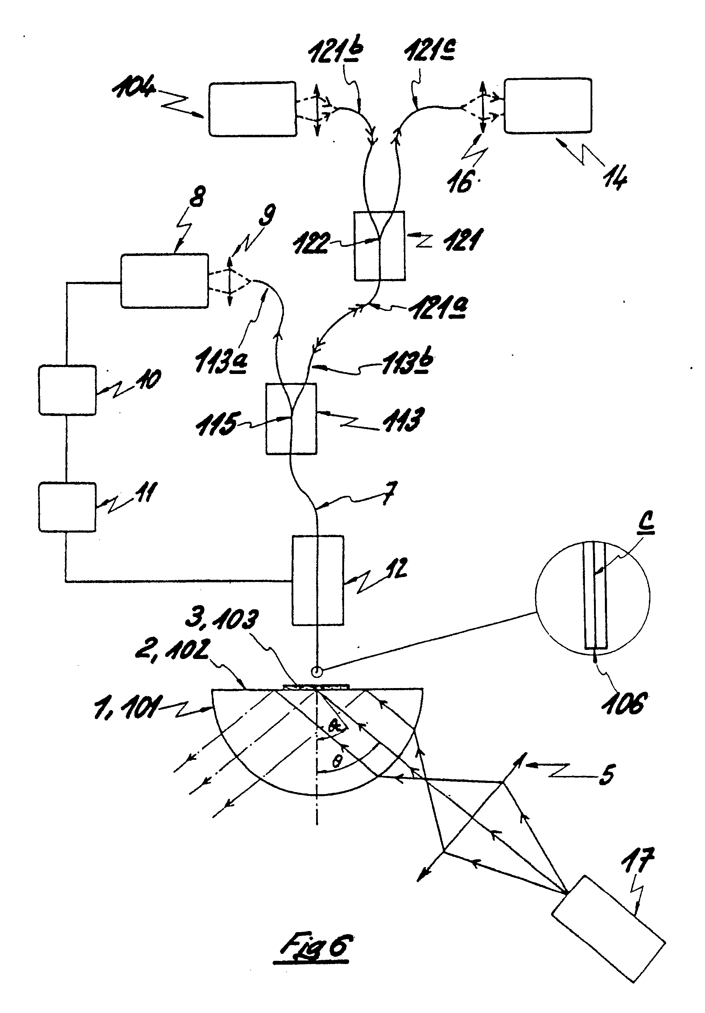

- la figure 6 est une vue schématique d'une deuxième forme d'éxécution d'un microscope optique à balayage en champ proche guidé, mettant en oeuvre la première sous-variante de la deuxième variante de la deuxième exécution du procédé d'analyse spectroscopique objet de l'invention, et comportant notamment deux coupleurs optiques à fibres optiques, une source auxilliaire de rayonnement et un analyseur de spectres.

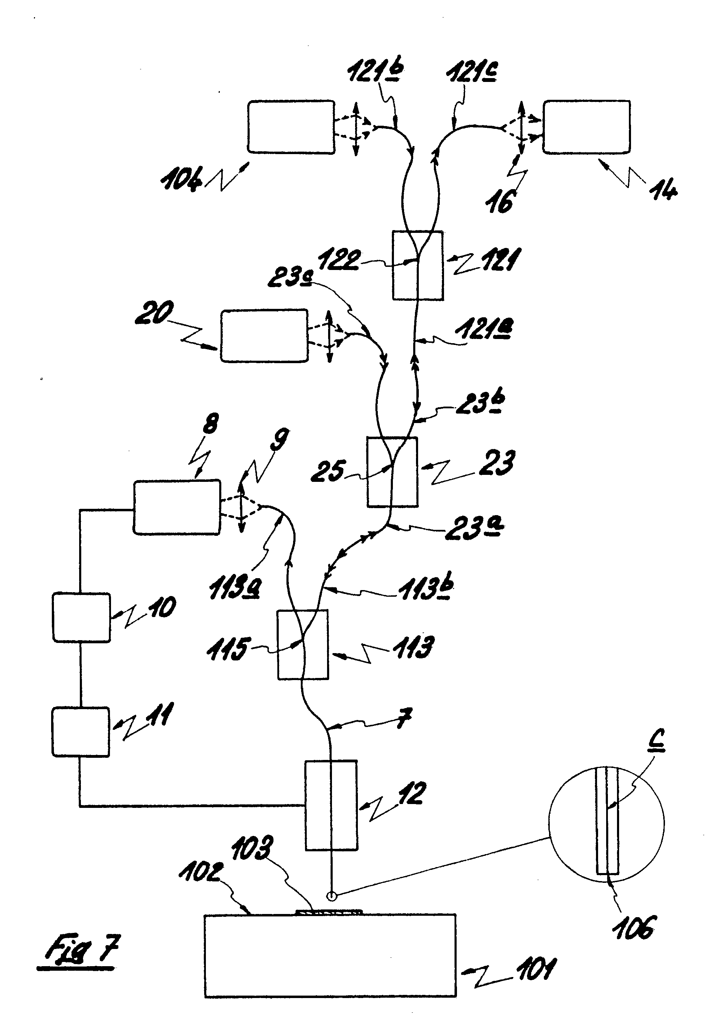

- la figure 7 est une vue schématique d'une troisième forme d'éxécution d'un microscope optique à balayage en champ proche guidé, mettant en oeuvre la deuxième sous-variante de la deuxième variante de la deuxième exécution du procédé d'analyse spectroscopique ponctuelle objet de l'invention, et comportant notamment trois coupleurs optiques à fibres optiques, une source auxilliaire de rayonnement et un analyseur de spectres,

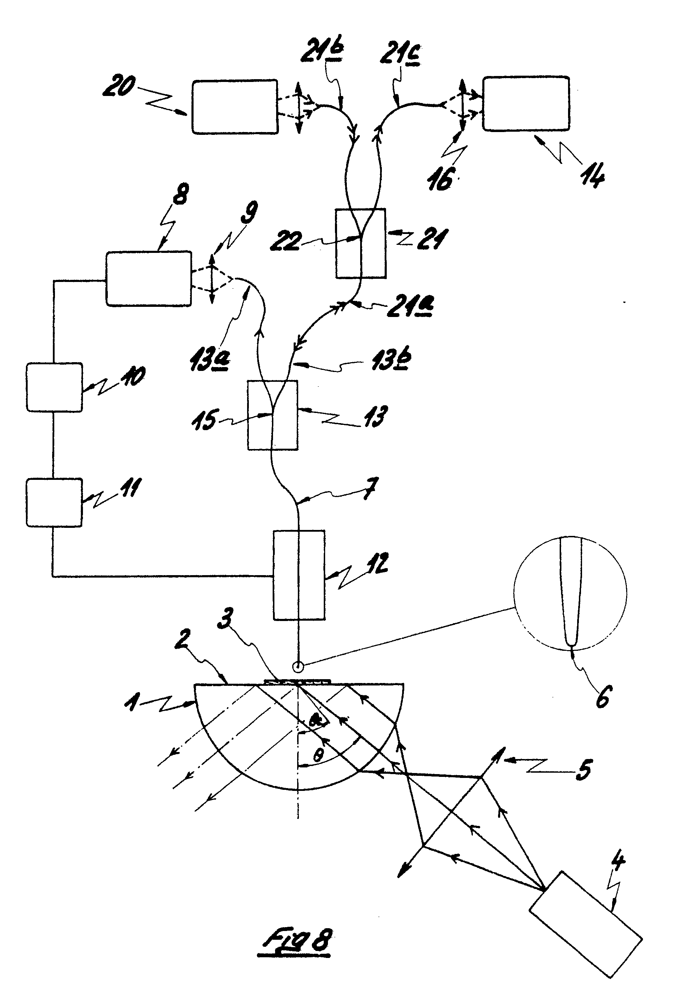

- la figure 8 est une vue schématique d'une troisième forme d'éxécution d'un microscope optique à balayage en champ évanescent frustré, mettant en oeuvre la deuxième sous-variante de la deuxième variante de la deuxième exécution du procédé d'analyse spectroscopique objet de l'invention, et comportant notamment deux coupleurs optiques à fibres optiques, une source auxilliaire de rayonnement et un analyseur de spectres. Cette figure est également conforme, pour l'essentiel, à une variante de l'exécution en réflexion dudit procédé.

Sur ces figures, les éléments identiques entrant dans chaque variante sont systématiquement référencés à l'aide des mêmes numéros. Par ailleurs, les figures étant des schémas fonctionnels, les proportions des éléments entre eux ne sont pas respectées.

Conformément à la figure 1, nous décrirons tout d'abord un microscope optique à balayage par transmission en champ évanescent frustré conventionnel. Celui-ci comporte :

- un corps transparent 1, du type d'un prisme hémicylindrique, ou hémisphérique, présentant au moins une face 2 horizontale de manière à pouvoir supporter une substance transparente 3 dont on veut relever le profil optique. Pour une bonne observation, il est conventionnel d'intercaler un liquide d'indice (ou adaptateur d'indice) entre la face 2 et la substance 3.

- une source 4 de rayonnement électromagnétique, favorablement monochromatique, du type par exemple d'un laser hélium-néon ou d'un laser à argon. Le faisceau lumineux issu de cette source 4 est orienté sur le dessous de la face 2 suivant un angle $\theta$ supérieur à un angle $\theta_c$ pour lequel il se produit une réflexion totale dudit faisceau. L'angle critique $\theta_c$ est donné en fonction de l'indice de réfraction optique n1 du corps transparent 1 et de l'indice de réfraction optique n2 du milieu se trouvant en contact immédiat avec le dessus de la face 2 (n2 étant inférieur à n1), conformément à la formule :

$$\theta_c = \arcsin(n2/n1)$$

- un dispositif optique convergent, du type d'une lentille convergente 5, qui permet de faire converger le faisceau lumineux issu de la source 4 avant son entrée dans le corps transparent 1 lorsque celui-ci est un prisme hémicylindrique, dont on sait qu'il est convergent, et qu'il est nécessaire, par ailleurs, d'obtenir un faisceau lumineux parallèle en incidence sur la face 2. En outre, le diamètre du faisceau est suffisant pour illuminer la surface de la face 2, de telle sorte que la valeur du champ, au niveau de la substance transparente 3 reposant sur cette face 2, soit constant.
- une pointe fine transparente 6, servant de sonde optique, et maintenue à proximité de la face 2. Cette pointe 6 est constituée de l'extrémité amincie d'une fibre optique 7. Du fait de la réflexion interne totale du faisceau lumineux à l'intérieur du corps transparent 1, il existe un champ électromagnétique évanescent sur le dessus de la face 2 dans de milieu d'indice n2 ; ainsi qu'on l'a expliqué plus haut, la pointe 6 vient "frustrer" ce champ évanescent, dont l'intensité représente de manière très précise la distance séparant l'extrémité de la pointe du lieu où s'est produit la réflexion totale de la lumière incidente.
- un photodétecteur 8, chargé de mesurer l'intensité du champ évanescent frustré par la pointe 6, et qui s'est propagé dans la fibre optique 7 jusqu'à son extrémité 7a , pour être couplé au photodétecteur 8 au moyen d'un dispositif optique 9 approprié.
- un ordinateur 10, muni des interfaces de mesure nécessaires non représentées sur la figure 1, apte à enregistrer et traiter la valeur de l'intensité transmise par le photodétecteur 8. Dans le case le plus favorable à l'obtention d'images précises de la substance transparente 3, un circuit de contre-réaction 11, relié à l'ordinateur 10, assure la comparaison entre la valeur de cette intensité et une valeur de consigne, de manière à réagir, par l'intermédiaire d'un moyen de positionnement vertical nanométrique du type d'un tube piezo-électrique 12, sur la position verticale de la pointe 6 en fonction de l'écart des deux valeurs ; ce contrôle est très sensible en raison de la décroissance exponentielle du champ évanescent frustré en fonction de la distance de la pointe 6 à la surface émettrice de ce champ.

Par ailleurs, l'ordinateur 10, par l'intermédiaire du circuit 11, contrôle le balayage latéral de la pointe 6 au-dessus de la face 2 et de la substance transparente 3. Pour ce faire, il est usuel et avantageux d'utiliser un tube piezo-électrique 12 à quadrants, par exemple réalisé dans un matériau peu sensible aux dilatations thermiques du type PZT (5H) ; un tel tube piezo-électrique 12 peut, en effet, être utilisé aussi bien pour déplacer verticalement la pointe 6, que pour assurer son déplacement latéral. L'enregistrement par l'ordinateur 10 des déplacements de la pointe 6 lui permet d'établir le profil optique de la substance transparente 3.

Conformément à la figure 2, on décrira maintenant un microscope optique à balayage par réflexion en champ proche guidé conventionnel.

Celui-ci comporte :
- un support 101 présentant au moins une face 102 horizontale de manière à pouvoir supporter une substance réfléchissante 103 dont on veut relever le profil géométrique.
- une source 104 de rayonnement électromagnétique, favorablement monochromatique, du type d'un laser hélium-néon ou d'un laser à argon. Cette source pourrait également être une diode électroluminescente à bande étroite, ou une diode laser.
- un coupleur optique 113 à fibres optiques. Ce coupleur optique 113 est d'un type connu, réalisé par fusion/étirage de deux fibres optiques, par exemple, en silice. Il présente ainsi deux voies de transmission 113a et 113b en sortie et au moins une voie de transmission en entrée, constituée avantageusement par une fibre optique 7. Le rayonnement issu de la source 104 est couplé, par un dispositif optique 105 approprié, à la voie de transmission 113b en sortie, puis se propage vers l'extrémité de la fibre optique 7, où il est orienté vers la substance réfléchissante 103. Ladite extrémité est étirée de manière à présenter un coeur c de petit diamètre, et constitue une sonde optique ponctuelle 106. On a figuré par 115 la zone de fusion du coupleur optique 113.
- un photodétecteur 8 relié, par un dispositif optique 9 approprié, à la voie de transmission 113a en sortie du coupleur optique 113. Ce photodétecteur 8 est chargé de mesurer l'intensité du champ proche guidé, résultant de la propagation dans la fibre optique 7, puis dans la voie de transmission 113a du rayonnement réfléchi par la substance réfléchissante 103.

- un ordinateur 10, muni des interfaces de mesure nécessaires non représentées sur la figure 1, apte à enregistrer et traiter le valeur de l'intensité mesurée par le photodétecteur 8. Dans le cas le plus favorable à l'obtention d'images précises de la substance réfléchissante 103, un circuit de contre-réaction 11, relié à l'ordinateur 10, assure la comparaison entre la manière à réagir, par l'intermédiaire d'un moyen de positionnement vertical nanométrique tel un tube piezo-électrique 12, sur la position verticale de la sonde optique 106 en fonction de l'écart des deux valeurs ; ce contrôle est très sensible en raison de la décroissance exponentielle du champ proche guidé en fonction de la distance de la sonde optique 106 à la surface de la substance réfléchissante 103.

Par ailleurs, l'ordinateur 10, par l'intermédiaire du circuit de contre-réaction 11, contrôle le balayage latéral de la sonde 106 au-dessus de la face 102 et de la susbtance réfléchissante 103. Pour ce faire, il est usuel d'utiliser un tube piezo-électrique 12 à quadrants, par exemple réalisé dans un matériau peu sensible aux dilatations thermiques du type PZT (5H). L'enregistrement par l'ordinateur 10 des déplacement de la sonde 106 lui permet d'établir le profil géométrique de la susbtance réfléchissante 103.

On décrira ci-après la première exécution du procédé d'analyse spectroscopique ponctuelle objet de l'invention.

On rappelle que, dans cette première exécution dudit procédé, l'analyse spectroscopique porte sur le premier rayonnement électromagnétique, génèrant, par réflexion ou par transmission, un champ proche, ce champ proche servant, par ailleurs, à effectuer une microscopie optique à balayage en champ proche de la substance soumise à l'étude.

Ce cas correspond, notamment, à la spectroscopie par effet Raman. Cet effet s'observe avantageusement dans tout le domaine visible du spectre électromagnétique. Il est rappelé que ce type de spectroscopie est l'une des plus riches de la physique, car elle permet, en liaison avec la spectroscopie infrarouge, d'enregistrer l'ensemble des spectres vibrationnels et rotationnels d'une substance, et notamment, en transmission, d'une substance transparente 3, ou, en réflexion, d'une substance réfléchissante 103. Plus généralement, la substance soumise à l'étude peut être du type d'un échantillon biologique, à la fois transparent et réfléchissant. On sait même enregistrer en peu de temps sur un seul spectromètre la totalité du domaine spectral concerné. Cette possibilité est également mise en oeuvre dans le procédé d'analyse spectroscopique conforme à cette première exécution de l'invention.

Il convient également de remarquer que si les techniques actuelles de spectrométrie Raman ont permis de réduire les dimensions du volume de la substance observée jusqu'aux limites physiques fixées par la diffraction de la lumière, le procédé d'analyse spectroscopique ponctuelle, appliqué suivant les enseignements de cette première éxécution de l'invention, permet d'abaisser encore ces limites. En effet, ainsi qu'on l'a mentionné précédemment, les spectroscopies en champ proche, aussi bien par réflexion qu'en transmission, sont très directives ; elles sont donc opérées, conformément à l'invention, sous des angles solides de très faible étendue.

Comme, par ailleurs, l'effet Raman est un effet de diffusion inélastique du rayonnement excitateur, le spectre Raman obtenu est généralement peu étendu autour de sa longueur d'onde centrale. Ce rayonnement excitateur correspond, suivant cette première exécution de l'invention, au rayonnement issu, en transmission, de la source 4, et, en réflexion, de la source 104. L'influence de la décroissance très rapide de l'intensité du champ proche, en fonction de la longueur d'onde de ce rayonnement, est donc négligeable. On peut de toute manière en tenir compte, et corriger le spectre obtenu à partir des expressions connues des intensités d'un champ évanescent frustré, et d'un champ proche guidé en réflexion, par rapport aux paramètres physiques dont celles-ci dépendent.

Suivant une première variante de cette première exécution du procédé conforme à l'invention, l'analyse spectroscopique d'une substance au moins transparente 3, placée sur la face 2 d'un corps transparent 1, s'effectue sur la fraction, transmise par celle-ci, du rayonnement électromagnétique orienté sur le dessous de ladite face 2, ce rayonnement servant, par ailleurs, à la microscopie en champ évanescent frustré de ladite substance 3.

Conformément à la figure 3, une première forme d'éxécution d'un microscope optique à balayage en champ évanescent frustré, mettant en oeuvre cette variante, comporte, en sus de éléments déjà mentionnés en référence à la figure 1, au moins un coupleur optique 13 à fibres optiques et un analyseur de spectres 14.

Le coupleur optique 13 est d'un type connu, réalisé par fusion/étirage de deux fibres optiques, par exemple, en silice.

Suivant l'invention, la fibre optique 7 constitue l'une des voies de transmission en entrée du coupleur 13. La pointe fine transparente 6, servant de sonde optique, est alors réalisée par attaque chimique de l'extrémité de ladite fibre 7 ; cette technique d'amincissement d'une fibre optique en silice est connue en soi, et consiste à plonger l'extrémité de cette fibre dans un bain acide, du type HF, pendant quelques dizaines de minutes. On réussit par ce moyen à obtenir des pointes 6 dont le diamètre n'excède pas 100 nanomètres, leur profil extrême étant sensiblement hémisphérique.

Le coupleur optique 13 permet de récupérer, dans la fibre optique 7, 100% de l'intensité du champ évanescent frustré transmis par la substance transparente 3 et capté par la pointe 6.

- une fraction égale à (100-X)% de cette intensité est couplée, au niveau de la zone de fusion 15 du coupleur 13, dans une première voie de transmission en sortie 13a ; l'extrémité de cette voie 13a est elle-même couplée au photodétecteur 8 par le dispositif optique 9. De cette façon, connaissant (X) (par construction du coupleur 13) et les atténuations dues au coupleur 13, il et aisé de faire fonctionner le microscope à balayage en champ évanescent frustré de la manière conventionnelle ; la contre-réaction s'effectue alors sur la fraction de l'intensité reçue par le photodétecteur 8, soit (100-X)% de l'intensité du champ évanescent correspondant au rayonnement émis par la source 4.

- une fraction (X)% de l'intensité du champ évanescent frustré transmis par la substance transparente 3 est couplée, au niveau de la zone de fusion 15, dans une deuxième voie de transmission en sortie 13b du coupleur 13 ; la voie 13b est elle-même couplée à l'analyseur de spectres 14 par l'intermédiaire d'un dispositif optique 16. Cet analyseur de spectres 14 est un spectromètre Raman ou une microsonde du type connu sous le nom de "Microdil" ; du fait de sa grande sensibilité, une telle sonde permet d'analyser des rayonnement très peu intenses.

Etant donné que, dans cette variante de la première exécution du procédé d'analyse spectroscopique ponctuelle objet de l'invention, le rayonnement transmis au travers de la substance 3 est un champ évanescent frustré, on a choisi un coupleur optique 13 présentant une valeur de X suffisante (par exemple X = 90), pour que la luminosité du rayonnement issu de la voie de transmission 13b demeure susceptible de permettre à l'analyseur de spectres 14 de travailler dans les meilleures conditions ; la sensibilité des spectromètres Raman, constitue, en l'espèce un avantage certain. L'intensité reçue par le photodétecteur 8 (soit 100-X%) bénéficie, quant à elle, de l'amplification que lui donne ce photodétecteur 8, ou son équivalent, du type d'un photomultiplicateur. Il est bien entendu possible de travailler dans d'autres conditions de couplage.

Suivant une deuxième variante de cette première exécution du procédé conforme à l'invention, le champ proche est un champ proche guidé en réflexion. Il est généré par la réflexion d'un premier rayonnement électromagnétique issu de l'extrémité 106 d'un guide d'onde, du type d'une fibre optique 7, sur une substance au moins réfléchissante 103, le rayonnement réfléchi étant capté, en retour, par ladite extrémité 106, et se propageant alors à nouveau dans ledit guide d'onde. Ce rayonnement sert, par ailleurs, à la microscopie en champ proche guidé par réflexion de ladite substance 103.

Conformément à la figure 4, une première forme d'éxécution d'un microscope optique à balayage en champ proche guidé, mettant en oeuvre cette seconds variante, comporte, en sus des éléments déjà mentionnés en référence à la figure 2, un coupleur optique 121 à fibres optiques et un analyseur de spectres 14.

Le coupleur optique 121 à fibres optiques est d'une conception identique à celle des coupleurs optiques précédemment décrits, et notamment à celle du coupleur optique 113. Il présente au moins une voie de transmission en entrée 121a et deux voies de transmission en sortie 121b et 121c . La voie 121a est reliée à la voie de transmission 113b du coupleur 113. La voie 121b est reliée à une source 104 d'un rayonnement favorablement monochromatique, d'un type déjà mentionné. Enfin, la voie de transmission 121c est reliée à un analyseur de spectres 14, par l'intermédiaire d'un dispositif optique 16 apppproprié. On a figuré par 122 la zone de fusion du coupleur optique 121.

La fibre optique 7, qui constitue avantageusement une voie de transmission du coupleur optique 113, est étirée à son extrémité pour former une sonde optique 106, présentant un petit coeur c .

Par conséquent, avec le microscope décrit en référence à la figure 4, un rayonnement électromagnétique issu de la source 104 se propage au travers du coupleur optique 121, puis au travers du coupleur optique 113, jusqu'à être émis vers la substance 103 où il se réfléchit, avant d'être récupérée par la sonde optique 106 parfaitment adaptée à cet usage. Ce rayonnement, qui présente alors la structure d'un champ proche guidé en réflexion, se propage jusqu'au photodétecteur 8 ; l'asservissement de la position verticale de la sonde optique 106, et par conséquent la profilométrie de la substance 103, est assuré par le circuit de contre-réaction 11 et par le tube piezo-électrique 12.

Dans le même temps, le champ proche guidé se propage au travers du coupleur optique 113 et du coupleur optique 121 vers l'analyseur de spectres 14. Les données spectroscopiques ponctuelles, obtenues, en réflexion, de la substance 3, sont enregistrés simultanément avec les données profilométriques, obtenues en réflexion, de cette même substance. A cet effet, l'analyseur de spectres 14, du type d'un spectromètre Raman, est relié à l'ordinateur 10 suivant un schéma non représenté sur la figure 4.

Les couplages des deux coupleurs optiques 113 et 121 sont bien entendu choisi de manière à permettre l'obtention d'un spectre Raman en réflexion qui soit le plus lumineux possible, tout en maintenant une intensité suffisante sur le photodétecteur 8.

On décrira ci-après la deuxième exécution du procédé d'analyse spectroscopique ponctuelle conforme à la présente invention.

On rappelle que dans cette deuxième exécution dudit procédé, l'analyse spectroscopique porte sur un rayonnement électromagnétique complexe, orienté sur la substance transparente et/ou réfléchissante à analyser, en même temps que le premier rayonnement électromagnétique, générant, par réflexion ou par transmission, un champ proche. Ce champ proche sert, par ailleurs, à effectuer une microscopie optique à balayage, en transmission ou en réflexion, de ladite substance.

De cette façon, on peut obtenir des spectres très larges de la substance à étudier, et non plus seulement un spectre de diffusion inélastique centré autour de la longueur d'onde du rayonnement favorablement monochromatique servant à la microscopie.

Cette deuxième exécution présente, elle-même, deux variantes principales, selon la manière dont on choisit d'orienter le rayonnement complexe sur la substance transparente et/ou réfléchissante soumise à l'étude.

On peut, en effet, dans une première variante, opérer une analyse spectroscopique d'un rayonnement complexe dont les composantes spectrales ne présentent pas la structure d'un champ proche. Cette variante est la plus proche des techniques spectroscopiques classiques ; la résolution de l'analyse est limitée par la diffraction, mais bénéficie du maintien à proximité de la sonde optique dû au fonctionnement du microscope en champ proche. Il s'agit par conséquent d'un perfectionnement déjà notable desdites techniques actuelles. Comme, par ailleurs, on procede à une microscopie simultanée, les informations obtenues ponctuellement par l'analyse spectroscopique sont interprétables d'une manière nouvelle par rapport à ces techniques.

Il est important de remarquer que, dans cette variante, les informations spectroscopiques obtenues, par réflexion ou par transmission, ne sont pas masquées par les différences d'intensité dues à la dépendance d'un champ proche en fonction de sa longueur d'onde : il n'y a, par conséquent, aucune correction à apporter à ces informations, qui sont recueillies par un analyseur de spectres adapté au domaine spectral considéré.

Par ailleurs, comme on l'a déjà dit, le microscope optique à balayage en champ proche sert, en dehors des images qu'il fournit de la substance soumise à l'étude, de capteur de proximité ; cette proximité permet de réduire l'étendue de la surface de ladite substance concernée par l'étude spectroscopique ponctuelle opérée par le rayonnement électromagnétique complexe.

Dans une deuxième variante de cette deuxième exécution du procédé d'analyse spectroscopique ponctuelle conforme à l'invention, on s'arrange, au contraire de la première variante, pour que les composantes spectrales du rayonnement complexe présentent la structure d'un champ proche ; comme on l'a démontré plus haut, cette situation est favorable à l'obtention d'une résolution spectroscopique identique à la résolution microscopique en champ proche, sans limitation due à la diffraction.

Dans ce cas, puisque l'intensité d'un champ proche dépend de sa longueur d'onde, chaque composante spectrale du rayonnement électromagnétique complexe va être détectée par la sonde optique avec une intensité propre, dépendant directement de sa longueur d'onde. : ainsi, l'intensité du champ proche correspondant à une composante spectrale de longueur d'onde $\beta_1$ sera différente de l'intensité due champ proche correspondant à une composante spectrale de longueur d'onde $\beta_2$ différente de la longueur d'onde $\beta_1$.

En outre, chaque composante spectrale va subir une absorption ou une diffusion différente en traversant la substance au moins transparente 3, ou en se réfléchissant sur la substance au moins réfléchissante 103. C'est ce dernier facteur qui est intéressant et qu'il convient de mesurer par spectroscopie ; or, ce facteur est masqué par les différences d'intensité dues au phénomène susmentionné. Néanmoins, connaissant une expression suffisament exacte de l'intensité d'un champ proche en fonction de sa longueur d'onde, on remédie facilement à cet inconvénient par un calcul de compensation lors de l'exploitation des résultats procurés par l'analyse spectroscopique.

On notera que la spectroscopie Raman est également concernée par cette deuxième variante de la deuxième exécution du procédé d'analyse spectroscopique ponctuelle conforme à l'invention : le champ proche complexe, ayant interagi avec la substance transparente et/ou réfléchissante soumise à l'étude, est alors étudié par balayage dans un spectromètre Raman, où sont détectés les phénomènes de diffusion inélastique plutôt que les phénomènes d'absorption, ou de diffusion élastique (spectromètre à bande étroite, éventuellement accordable).

On décrira ci-après la première sous-variante de la deuxième variante de cette deuxième exécution du procédé d'analyse spectroscopique ponctuelle, objet de l'invention.

Dans cette première sous-variante, le champ proche complexe servant à l'analyse spectroscopique est un champ évanescent frustré complexe.

C'est-à-dire que l'analyse spectroscopique d'une substance au moins transparente 3 s'effectue sur la fraction, transmise par cette substance 3, d'un rayonnement électromagnétique complexe orienté sur le dessous de la face 2 du corps transparent 1, de manière à y subir une réflexion interne totale, et à générer, sur le dessus de ladite face 2, un champ évanescent frustré complexe.

Conformément aux figures 5 et 6, ce rayonnement complexe est issu d'une source 17.

La source de rayonnement 17 peut être de tout type communément employé pour effectuer des analyses spectroscopiques, et on choisit selon le cas entre une source thermique et une lampe à décharge ; en effet, un avantage particulièrement intéressant de la présente invention consiste en ce que la fréquence de coupure de la fibre optique 7 est situé dans l'ultraviolet, à 180 nanomètres (fibre en silice). Or une lampe à arc à hydrogène, ou à deutérium, qui émet le rayonnement de plus faible longueur d'onde, couvre un domaine spectral allant de 170 nanomètres à 350 nanomètres ; la fibre optique 7 permet la propagation de la majeure partie de ce rayonnement. De même, une lampe à incandescence à enveloppe de verre couvre un domaine spectral compris entre 300 nanomètres et 2,5 micromètres, et un rayonnement continu (ou complex) émis par cette lampe peut donc se propager également dans la fibre optique 7. L'utilisation d'une fibre optique 7 en silice n'est pas limitative, et on connait notamment des fibres plastiques, ou des fibres en saphir, ayant des "fenêtres" spectrales de propagation différentes, ou présentant des atténuations moindres vis à vis d'ondes électromagnétiques pouvant se propager également dans des fibres en silice.

Par ailleurs, du fait de la transparence de la substance 3 soumise à l'étude, on peut relever, en transmission, son profil optique ; la mise en oeuvre de cette première sous-variante peut donc être réalisée à partir d'un microscope en champ évanescent frustré (fig.5).

Dans le cas très fréquent où la substance 3 est, en outre, réfléchissante (échantillons biologiques notamment), on peut relever, en réflexion, son profil géométrique ; la mise en oeuvre de cette première sous- variante peut alors être réalisé à partir d'un microscope en champ proche guidé (fig.6).

Conformément à la figure 5, une deuxième forme d'exécution d'un microscope optique à balayage en champ évanescent frustré, mettant en oeuvre cette première sous-variante de la deuxième variante de la deuxième exécution du procédé d'analyse spectroscopique conforme à l'invention, comporte, en sus des éléments déjà mentionnés en référence à la figure 3, au moins une source de rayonnement 17 généralement continu, c'est-à-dire complexe.

Par l'intermédiaire d'un système optique 18, le rayonnement complexe issu de la source 17 est mélangé optiquement avec le rayonnement électromagnétique émis par la source 4, et se propage sur le même trajet optique ; il subit, de ce fait, une réflexion totale sur le dessous de la face 2 du corps transparent 1. Un champ évanescent complexe est, par conséquent, généré sur le dessus de la face 2, et peut être capté par la sonde optique, du type de la pointe fine transparente 6.

On notera que le dispositif optique convergent, du type d'une lentille convergente 5, qui permet de faire converger les rayonnements issus des sources 4 et 17 avant leur entrée dans le corps transparent 1 est, en combinaison avec le système optique 18, sensiblement achromatique ; en effet, les faisceaux correspondants aux deux rayonnements doivent se propager parallèlement dans ledit corps transparent 1, de manière à procurer des champs sensiblement constants au niveau de la substance transparente 3.

Le coupleur optique 13, déjà décrit en référence à la figure 3, permet de récupérer, dans la fibre optique 7, 100% des intensités des champs évanescents transmis par la substance transparente 3 et captés par la pointe 6.

- une fraction égale à (100-X)% de ces intensités est couplée, au niveau de la zone de fusion 15 du coupleur 13, dans une première voie de transmission en sorte 13a ; l'extrémité de cette voie 13a est elle-même couplée au photodétecteur 8 par le dispositif optique 9. En outre, un filtre optique 19, du type d'un filtre interférentiel, permet d'isoler le seul rayonnement électromagnétique servant à la microscopie. De cette façon, connaissant (X) (par construction du coupleur 13) et les atténuations dues au coupleur 13, il est aisé de faire fonctionner le microscope à balayage en champ évanescent frustré de la manière conventionnelle ; la contre-réaction s'effectue alors sur la fraction de l'intensité reçue par le photodétecteur 8, soit (100-X)% de l'intensité du champ évanescent correspondant au rayonnement émis par la source 4.

- une fraction (X)% des intensités des champs évanescents transmis par la substance transparente 3 est couplée, au niveau de la zone de fusion 15, dans une deuxième voie de transmission en sortie 13b du coupleur 13 ; la voie 13b permet est elle-même couplée à l'analyseur de spectres 14 par l'intermédiaire d'un dispositif optique 16. Cet analyseur de spectres 14 peut être un spectrographe, un spectroscope, ou encore un spectrophotomètre ; dans ce dernier cas, l'enregistrement du spectre du champ évanescent frustré complexe transmis par la substance transparente 3 peut être effectué par des caméras rapides contrôlées par l'ordinateur 10.

Etant donné que les rayonnements transmis par la substance 3 sont des champs évanescents frustrés, on a choisi un coupleur optique 13 présentant une valeur de X suffisante (par exemple X = 90), pour que la luminosité du rayonnement complexe issu de la voie de transmission 13b demeure susceptible de permettre à l'analyseur de spectres 14 de travailler dans les meilleures conditions. L'intensité du rayonnement reçue par le photodétecteur 8 (soit 100-X)%, afin d'assurer le pilotage du microscope en champ évanescent frustré, bénéficie, quant à elle, de l'amplification que lui donne ce photodétecteur 8, ou son équivalent, du type d'un photomultiplicateur.

Les données spectroscopiques ponctuelles, obtenues en transmission, de la substance 3 sont enregistrés simultanément avec les données du profil optique, obtenues, également en transmission, de cette même substance 3. Les données spectroscopiques sont en outre corrigées afin de tenir compte des effets de champ proche, atténuant progressivement les intensités des composantes spectrales du champ évanescent frustré complexe.

On décrira maintenant, conformément à la figure 6, une deuxième forme d'exécution d'un microscope optique à balayage en champ proche guidé, mettant en oeuvre la première sous-variante de la deuxième variante de la deuxième exécution du procédé d'analyse spectroscopique ponctuelle, objet de la présente invention. Ce microscope comporte, pour l'essentiel, des éléments identiques à ceux décrits en référence à la figure 4, sauf pour ce qui concerne le support 101 qui est ici avantageusement constitué par un corps transparent 1, identique à celui employé dans les microscopes en champ évanescent frustré décrits précédemment en référence aux figures 1, 3 et 5. De même, on dénommera indifféremment par 2 ou 102 la face horizontale supportant la substance à analyser. Elle-même sera référencée par 3 ou 103, selon qu'on utilise sa nature transparente, ou sa nature réfléchissante.

La source 17 émet un rayonnement électromagnétique complexe qui est orienté sur le dessous de la face 2, 102 du support 1, 101 suivant un angle d'incidence $\theta$ supérieur à l'angle d'incidence critique $\theta_c$ donné par les indices de réfraction optiques n1 du support 1, 101, et n2, du milieu se trouvant immédiatement au-dessus de ladite face 2, 102.

La situation de la source 17 par rapport au support 101 constitué par un corps transparent 1, du type d'un prisme hémicylindique, est de cette façon avantageusement identique à celle de la source 4 d'un rayonnement monochromatique décrite en référence aux figures 1, 3, 5 ; la lentille convergente 5 joue le même rôle dans les deux configurations, en permettant au rayonnement orienté en incidence sous la face 2, 102 de se propager parallèlement à l'intérieur du support 1, 101.

Par ailleurs, il est important de noter que l'extrémité de la fibre optique 7, désignée comme sonde optique 106, présente un coeur c de petit diamètre, ce qui convient bien à la microscopie en champ proche guidé. Par contre, ainsi qu'on l'a explique plus haut, il est plus favorable d'utiliser une extrémité de fibre optique 7 amincie en pointe fine 6 pour frustrer ponctuellement un champ évanescent ; cependant, une extrémité du type de la sonde optique 106 peut également être utilisée, du fait de la structure très avantageuse d'un champ évanescent frustré à décroissance exponentielle (une explication mieux détaillée est fournie plus haut).

Par conséquent, avec le microscope décrit en référence à la figure 6, un rayonnement électromagnétique issu de la source 104 se propage au travers du coupleur optique 121, puis au travers du coupleur optique 113, jusqu'à être émis vers la substance 103 où il se réfléchit, avant d'être récupérée par la sonde optique 106 parfaitement adaptée à cet usage. Ce rayonnement, qui présente alors la structure d'un champ proche guidé en réflexion, se propage alors jusqu'au photodétecteur 8 ; l'asservissement de la position verticale de la sonde optique 106, et par conséquent la profilométrie de la susbtance 103, résulte donc bien de l'utilisation d'un microscope en champ proche guidé. Dans le même temps, la sonde optique 106 frustre un champ évanescent complexe généré, par le dessous de la face 2, 102, par la réflexion interne totale d'un rayonnement électromagnétique complexe issu de la source 17. Ce champ complexe se propage alors au travers du coupleur optique 113 et du coupleur optique 121 vers l'analyseur de spectres 14. Les données spectroscopiques ponctuelles, obtenues en transmission de la substance 3, 103 sont enregistrés simultanément avec les données profilométriques, obtenues en réflexion, de cette même substance 103, 3. Les données spectroscopiques sont en outre corrigées afin de tenir compte des effets de champ proche, atténuant progressivement les intensités des composantes spectrales du champ évanescent frustré complexe.

On décrira maintenant la deuxième sous-variante de la deuxième variante de la deuxième exécution du procédé d'analyse spectroscopique ponctuelle conforme à la présente invention.

Dans cette deuxième sous-variante, l'analyse spectroscopique ponctuelle est opérée en réflexion à partir d'un rayonnement électromagnétique complexe, dont les composantes spectrales présentent la structure d'un champ proche guidé. C'est-à-dire que l'analyse spectroscopique d'une substance au moins réfléchissante 103 s'effectue sur la fraction, réfléchie par cette substance 103, d'un rayonnement électromagnétique complexe se propageant dans la fibre optique 7 vers le dessus de la face 102 du support 101, de manière à y subir une réflexion, puis à être prélevé par la sonde optique 106, afin de se propager à nouveau dans la fibre optique 7. De cette manière, si la distance entre la sonde optique 106 et la surface réfléchissante de la substance 103 est suffisamment petite, les composantes spectrales du rayonnement complexe, se propageant en retour dans la fibre optique 7, présentent bien la structure d'un champ proche guidé en réflexion.

Conformément aux figures 7 et 8, ce rayonnement complexe est issu d'une source 20.

La source de rayonnement 20 peut être de tout type communément employé pour effectuer des analyses spectroscopiques, et on choisit selon le cas entre une source thermique et une lampe à décharge. Cette source 20 est globalement identique à la source 17 utilisée par les microscopes en champ évanescent frustré décrits en référence aux figures 5 et 6.

Par ailleurs, du fait que la substance 3 soumise à l'étude est réfléchissante, on peut relever, en réflexion, son profil optique ; la mise en oeuvre de cette deuxième sous-variante peut donc être réalisée à partir d'un microscope en champ proche guidé (fig.7).

Dans le cas très fréquent où la substance 103 est, en outre, transparente (échantillons biologiques notamment), on peut relever, en transmission, son profil optique; la mise en oeuvre de cette deuxième sous-variante peut alors être réalisée à partir d'un microscope en champ évanescent frustré (fig.8).

Conformément à la figure 7, une forme d'exécution d'un microscope optique à balayage en champ proche guidé, mettant en oeuvre cette deuxième sous-variante de la deuxième variante de la deuxième exécution du procédé d'analyse spectroscopique ponctuelle, objet de l'invention, comporte, en sus des éléments déjà mentionnés en référence à la figure 4, au moins une source 20 d'un rayonnement complexe et un coupleur optique 23 à fibres optiques.

Ce coupleur optique 23, de conception identique à celle des coupleurs optiques 113 et 121, présente au moins une voie de transmission 23a en entrée et deux voies de transmission 23b et 23c en sortie. Il est intercalé entre le coupleur optique 113 et le coupleur optique 121 de la manière suivante :

- la voie 23a est reliée à la voie 113b en sortie du coupleur optique 113.

- la voie 23b est reliée à la voie 121a en entrée du coupleur 121.

En outre, la voie 23c est reliée à la source de rayonnement 20. Enfin, on a figuré par 24 la zone de fusion du coupleur optique 23.

Par conséquent, avec le microscope décrit en référence à la figure 7, un rayonnement électromagnétique favorablement monochromatique, issu de la source 104, se propage au travers du coupleur optique 121, puis au travers du coupleur optique 23, et enfin au travers du coupleur optique 113, jusqu'à être émis vers la substance 103 où il se réfléchit, avant d'être récupérée par la sonde optique 106, parfaitement adaptée à cet usage. Ce rayonnement, qui présente alors la structure d'un champ proche guidé en réflexion, se propage jusqu'au photodétecteur 8 ; l'asservissement de la position verticale de la sonde optique 106, et par conséquent la profilométrie de la substance 103, est assuré par le circuit de contre-réaction 11 et par le tube piezo-électrique 12.

Dans le même temps, un rayonnement électromagnétique complexe, issu de la source 20, se propage au travers du coupleur optique 23, puis au travers du coupleur optique 113, jusqu'à être émis vers la substance 103 où il se réfléchit, avant d'être récupérée par la sonde optique 106, parfaitement adaptée à cet usage. Les composantes spectrales de ce rayonnement complexe présentent alors la structure d'un champ proche guidé en réflexion. Ces composantes se propagent alors au travers du coupleur 113, puis du coupleur 23, et enfin du coupleur 121, jusqu'à l'analyseur de spectres 14.

Les données spectroscopiques ponctuelles, obtenues, en réflexion, de la substance 103, sont enregistrées simultanément avec les données profilométriques, obtenues en réflexion, de cette même substance. A cet effet, l'analyseur de spectres 14 est relié à l'ordinateur 10 suivant un schéma non représenté sur la figure 7.

Les couplages des trois coupleurs optiques 113, 23 et 121 sont bien entendu choisis de manière à permettre l'obtention d'un spectre en réflexion qui soit le plus lumineux possible, tout en maintenant une intensité suffisante sur le photodétecteur 8.

Il est enfin évident que la réalisation à trois coupleurs 23, 113, et 121 décrite précédemment n'est donnée qu'à titre d'exemple non limitatif. Un agencement différent de ces coupleurs entre eux convient en effet tout aussi bien. De même, dans la configuration décrite, il est intéressant d'intervertir les positions de l'analyseur de spectres 14 et de la source 20 : de cette façon, avant d'aboutir sur cet analyseur de spectres 14, le champ proche guidé complexe subit une atténuation moindre en ne traversant que deux coupleurs optiques, 113 et 23, plutôt que l'ensemble des trois coupleurs, 113, 23 et 121.

Conformément à la figure 8, une troisième forme d'exécution d'un microscope optique à balayage en champ évanescent frustré, mettant en oeuvre cette deuxième sous-variante de la deuxième variante de la deuxième exécution du procédé d'analyse spectroscopique ponctuelle, objet de l'invention, comporte, en sus des éléments déjà mentionnés en référence à la figure 3, au moins une source 20 d'un rayonnement complexe, et un second coupleur optique 21 à fibres optiques.

Comme dans les microscopes en champ évanescent frustré décrits en référence aux figures 3 et 5, le coupleur optique 13 permet de récupérer, dans la fibre optique 7, 100% de l'intensité du champ évanescent frustré transmis par la substance transparente 3 et capté par la pointe 6. Puis, une fraction égale à (100-X)% de cette intensité est couplée, au niveau de la zone de fusion 15 du coupleur 13, dans une première voie de transmission en sortie 13a ; l'extrémité de cette voie 13a est elle-même couplée au photodétecteur 8 par le dispositif optique 9. De cette façon, connaissant (X) (par construction du coupleur 13) et les atténuations dues au coupleur 13, il est aisé de faire fonctionner le microscope à balayage en champ évanescent frustré de la manière conventionnelle ; la contre-réaction s'effectue alors sur la fraction de l'intensité reçue par le photodétecteur 8, soit (100-X)% de l'intensité du champ évanescent correspondant au rayonnement émis par la source 4.

Par ailleurs, la deuxième voie de transmission en sortie 13b du coupleur 13 est reliée à une voie de transmission en entrée 21a du second coupleur optique 21. Ce coupleur 21 présente deux voies de transmission en sortie, à savoir 21b et 21c , couplées respectivement à la source de rayonnement complexe 20, et à l'analyseur de spectres 14. De cette façon :
- la totalité de l'intensité du rayonnement électromagnétique complexe émis par la source 20 se propage dans la voie de transmission en sortie 21b jusqu'à la zone de fusion 22 du coupleur 21.
- une fraction (100-Y)% de cette intensité se propage alors dans la voie de transmission en entrée 21a du coupleur 21, puis dans la voie de transmission en sortie 13b du coupleur 13.
- une fraction (X)% de cette fraction (100-Y)% de l'intensité est ensuite couplée, au niveau de la zone de fusion 15 du coupleur 13, dans la fibre optique 7, de manière à être émise par la pointe transparente 6 vers la surface de la substance transparente 3 à analyser.
- le champ électromagnétique complexe réfléchi par ladite surface est alors prélevé par cette même pointe transparente 6, et se propage dans la fibre optique 7 jusqu'à la zone de fusion 15 du coupleur 13.
- une fraction (X)% de l'intensité du champ complexe réfléchi par la substance transparente 3 est alors couplée dans la voie de transmission en sortie 13b du coupleur 13, puis dans la voie de transmission en entrée 21a du second coupleur optique 21.
- enfin, une fraction (Y)% de cette fraction (X)% de l'intensité est couplée, au niveau de la zone de fusion 22 du coupleur 21, dans la voie de transmission en sortie 21c dudit coupleur 21 reliée à l'analyseur de spectres 14.

Les liaisons optiques entre les deux coupleurs 13 et 21, et entre le coupleur 21, la source 20 et l'analyseur de spectres 14, sont assurées par des dispositifs optiques appropriés non représentés sur la figure 4.

L'analyse spectroscopique tient bien entendu compte des facteurs de couplage X et Y des coupleurs optiques 13 et 21, ces facteurs X et Y étant choisis suivant le domaine spectral à analyser et la sensibilité de l'analyseur de spectres 14.

Des configurations autres que celles utilisant des coupleurs optiques du type des coupleurs 13 et 21 peuvent bien entendu être mises en oeuvre dans l'esprit de l'invention, et nous mentionnerons par exemple les dispositifs présentant des lames optiques partiellement transparentes dont la fonction est identique, malgré une maniabilité moindre.

Il est important de remarquer que le microscope en champ proche guidé représenté sur la figure 6, et le présent microscope en champ évanescent frustré représenté sur la figure 8, sont quasiment identiques. Si, en effet, on veut étudier une substance à la fois transparente et réfléchissante, du type de la quasi-totalité des échantillons biologiques, les deux instruments peuvent fournir des indications complémentaires :
- l'un est piloté en réflexion, le profil géométrique de la substance étant relevé par ce biais, tandis qu'on l'analyse, en transmission, en champ évanescent frustré.
- l'autre est piloté en transmission, le profil optique de ladite substance étant relevé par ce biais, tandis qu'on l'analyse, en réflexion, en champ proche guidé.

Par conséquent, on peut incorporer ces deux instruments dans un seul microscope, et il suffit, pour ce faire, de disposer de deux sources 4 et 17 mélangés optiquement pour la transmission d'une part, et de deux sources 104 et 20, mélangés, par exemple, par le moyen décrit en référence à la figure 7, ou par un autre moyen plus conventionnel, d'autre part. En outre, on a vu que la pointe fine transparente 6 ou la sonde optique 106 peuvent convenir toutes les deux à l'un où à l'autre des deux instruments ; une réalisation intermédiaire de ces deux réalisations de l'extrémité de la fibre optique 7 permet de réaliser le microscope unique sus-mentionné. Il est possible également de changer, selon le besoin, l'extrémité de ladite fibre optique 7.

Un tel microscope est un microscope en champ proche polyvalent, réversible, et utilisable simultanément en spectroscopie d'un manière conforme à l'invention.

Une dernière caractéristique du procédé conforme à l'invention va être décrite maintenant.

En effet, il existe des cas où le rayonnement électromagnétique, transmis ou réfléchi par la substance analysée, ne peut se propager dans la fibre optique 7. Suivant l'invention, ce rayonnement est alors capté, en retour, par au moins une microsonde annexe, disposée à proximité de l'extrémité de ladite fibre optique 7.

Il peut notamment arriver qu'il se produise une diffusion très inélastique du rayonnement électromagnétique lors de son interaction avec ladite substance ; cette interaction peut être accompagnée, par exemple, d'une émission d'électrons secondaires.

Un tel effet est d'autant plus important que l'énergie dudit rayonnement augmente, et donc que sa longueur d'onde diminue. Comme la fréquence de coupure des fibres en silice est située dans l'ultraviolet, il est difficile d'observer ce phénomène dans les configurations d'un microscope en champ proche utilisant une fibre optique 7 conventionelle.

Néanmoins, conformément à une caractéristique complémentaire des microscopes en champ proche mettant en oeuvre le procédé d'analyse spectroscopique ponctuelle conforme à l'invention, la fibre optique 7 est une fibre fluorescente. On a ainsi choisi une fibre fluorescente en rayons X. De cette manière, il est possible, à partir d'une source de rayonnement 17 ou 20, émettant dans un domaine spectral donné, d'orienter un rayonnement électromagnétique de plus faible longueur d'onde vers la substance transparente et/ou réfléchissante soumise à l'étude.

Le rendement de fluorescence étant généralement assez faible, la microsonde annexe est d'un type très sensible. Dans certains cas, l'ensemble du microscope est mis sous vide, de manière à allonger le libre parcours moyen des rayonnements électromagnétiques de faible longueur d'onde, ou celui des électrons secondaires éventuellement émis par ladite substance.

La microsonde annexe peut équiper l'un quelconque des microscopes à champ proche décrits en référence aux figures 3 à 6. Avantageusement, elle peut être assujettie aux mêmes mouvements verticaux et latéraux que l'extrémité de la fibre optique 7 ; pour ce faire, on la rend solidaire du moyen de positionnement nanométrique tel le tube piézoélectrique 12, ou un tube piézoélectrique annexe, ces tubes piezo-électriques étant commandés simultanément par l'ordinateur 10 et le dispositif à contre-réaction 11.

Il est clair que ni les exécutions du procédé d'analyse spectroscopique ponctuelle, ni les microscopes optiques à balayage en champ proche mettant en oeuvre ces exécutions, ne sont limitées par les variantes décrites précédemment ou représentées à titre illustratif sur les figures annexées ; tout procédé équivalent, ou tout microscope du même type incorporant, dans l'esprit de l'invention, des éléments techniques équivalents aux éléments susmentionnés, ne sortiraient pas de son cadre.

De cette façon , tout capteur de proximité d'un type dérivé d'une autre forme de microscope à balayage, tel qu'un microscope à effet tunnel électronique, peut être utilisé pour maintenir l'extrémité d'un guide d'onde à proximité de la surface d'une substance réfléchissante et/ou transparente se trouvant dans une zone de champ proche ; l'analyse spectroscopique ponctuelle de la substance sera alors sensiblement la même, mais il est probable qu'on ne puisse pas simultanément obtenir une image microscopique simultanée de ladite substance.

La présente invention est plus particulièrement destinée à l'étude spectroscopique à haute résolution de substances transparentes et/ou réfléchissantes dont on relève simultanément le profil optique, ou le profil géométrique, au moyen d'un microscope optique à balayage en champ proche, tel qu'un microscope par transmission en champ évanescent frustré, ou un microscope par réflexion en champ proche guidé.

## Revendications

1 - Procédé d'analyse spectroscopique ponctuelle de la lumière diffractée ou absorbée par une substance transparente et/ou réfléchissante, placée dans un champ proche, généré, en transmission ou en réflexion, par un premier rayonnement électromagnétique, caractérisé en ce qu'on effectue une analyse spectroscopique ponctuelle dudit champ proche et/ou d'un second rayonnement électromagnétique, orienté simultanément avec ledit premier rayonnement sur ladite substance, ladite analyse concernant la fraction dudit champ proche ou dudit second rayonnement électromagnétique ayant interagi avec ladite substance.

2 - Procédé d'analyse spectroscopique ponctuelle suivant la revendication 1, caractérisé en ce qu'on utilise le champ proche pour établir, par microscopie à balayage en champ proche, le profil géométrique et/ou le profil optique de ladite substance, l'analyse spectroscopique ponctuelle et ladite microscopie s'effectuant simultanément.

3 - Procédé d'analyse spectroscopique ponctuelle suivant l'une quelconque des revendications 1 ou 2, caractérisé en ce que l'analyse spectroscopique porte sur le premier rayonnement électromagnétique, générant, par réflexion ou par transmission, un champ proche, ce champ proche servant, par ailleurs, à effectuer une microscopie optique à balayage en champ proche de la substance soumise à l'étude.

4 - Procédé d'analyse spectroscopique ponctuelle suivant la revendication 3, caractérisé en ce que le champ proche est un champ évanescent frustré, généré ponctuellement, en transmission, par la présence d'une sonde optique, du type de l'extrémité d'une fibre optique, dans un champ évanescent, ce champ évanescent résultant, pour sa part, de la réflexion interne totale d'un premier rayonnement électromagnétique sur une face d'un corps transparent, du type d'un prisme, la substance au moins transparente soumise à l'étude reposant sur cette face.

5 - Procédé d'analyse spectroscopique ponctuelle suivant la revendication 3, caractérisé en ce que le champ proche est un champ proche guidé en réflexion, généré par la réflexion d'un premier rayonnement électromagnétique issu de l'extrémité d'un guide d'onde, du type d'une fibre optique, sur une surface réfléchissante, le rayonnement réfléchi étant capté, en retour, par ladite extrémité, et se propageant alors à nouveau dans ledit guide d'onde.

6 - Procédé d'analyse spectroscopique ponctuelle suivant l'une quelconque des revendications 1 ou 2, caractérisé en ce que l'analyse spectroscopique porte sur un rayonnement électromagnétique complexe, orienté sur la substance transparente et/ou réfléchissante à analyser, en même temps que le premier rayonnement électromagnétique, générant, par réflexion ou par transmission, un champ proche, ce champ proche servant, par ailleurs, à effectuer une microscopie optique à balayage, en transmission ou en réflexion, de ladite substance.

7 - Procédé d'analyse spectroscopique ponctuelle suivant la revendication 6, caractérisé en ce qu'on oriente le rayonnement électromagnétique complexe sur la substance transparente et/ou réfléchissante à analyser, de manière à ce que les composantes spectrales dudit rayonnement complexe ne présentent pas la structure d'un champ proche, le microscope optique à balayage en champ proche servant alors, en dehors des images qu'il fournit de ladite substance, de capteur de proximité.

8 - Procédé d'analyse spectroscopique ponctuelle suivant la revendication 6, caractérisé en ce qu'on oriente le rayonnement électromagnétique complexe sur la substance transparente et/ou réfléchissante à analyser, de manière à ce que les composantes spectrales dudit rayonnement complexe présentent la structure d'un champ proche.

9 - Procédé d'analyse spectroscopique ponctuelle suivant la revendication 8, caractérisé en ce que le champ proche complexe servant à l'analyse spectroscopique est un champ évanescent frustré complexe, généré, en transmission, au travers d'une substance au moins transparente.

10 - Procédé d'analyse spectroscopique ponctuelle suivant la revendication 8, caractérisé en ce que le champ proche complexe servant à l'analyse spectroscopique est un champ proche guidé, généré, en réflexion, sur une substance au moins réfléchissante.

11 - Procédé d'analyse spectroscopique ponctuelle suivant l'une quelconque des revendications 9 ou 10, caractérisé en ce que la microscopie optique à balayage en champ proche de la substance s'effectue par transmission -en champ évanescent frustré - ou, par réflexion - en champ proche guidé -, selon que la substance soumise à l'étude est au moins transparente, ou au moins réfléchissante.

12 - Procédé d'analyse spectroscopique ponctuelle suivant l'une quelconque des revendications précédentes, caractérisé en ce que l'analyse spectroscopique ponctuelle de la substance soumise à l'étude est effectuée par au moins une microsonde annexe, disposée à proximité du guide d'onde, du type d'une fibre optique, nécessaire au fonctionnement de la microscopie en champ proche, ce qui permet, notamment, d'analyser la part de rayonnement électromagnétique ne pouvant se propager dans ledit guide d'onde.

13 - Microscope optique à balayage en champ proche caractérisé en ce qu'il met en oeuvre le procédé d'analyse spectroscopique ponctuelle conforme à l'une quelconque des revendications précédentes.

14 - Microscope optique à balayage en champ proche suivant la revendication 13, caractérisé en qu'il est constitué par au moins un microscope optique à balayage par transmission en champ évanescent frustré conventionnel.

15 - Microscope optique à balayage en champ proche suivant la revendication 13, caractérisé en qu'il est constitué par au moins un microscope optique à balayage par réflexion en champ proche guidé conventionnel.

16 - Microscope optique à balayage en champ évanescent frustré suivant la revendication 14, caractérisé en ce qu'il comporte, d'une part, une source (4) émettant un rayonnement électromagnétique sur le dessous de la face (2) d'un corps transparent (1) sur laquelle repose une substance (3) à analyser, d'autre part, un coupleur optique (13) de fibres optiques, présentant :

- une voie de transmission en entrée constituée par une fibre optique (7) dont l'extrémité est amincie de manière à former une pointe transparente (6),

- une première voie de transmission en sortie (13a) reliée à un photodétecteur (8), lui-même relié à un ordinateur (10), à un dispositif à contre-réaction (11), et à un moyen de positionnement vertical nanométrique, tel un tube piezoélectrique (12), assujettissant la pointe transparente (6), de manière à la maintenir à une distance constante de la substance transparente (3),
- une seconde voie de transmission en sortie (13b ) reliée, par un dispositif optique (16), à un analyseur de spectres (14), par exemple du type connu sous le nom de "spectromètre Raman".

17 - Microscope optique à balayage en champ évanescent frustré suivant la revendication 14, caractérisé en ce qu'il comporte, d'une part, une source (4) émettant un premier rayonnement électromagnétique sur le dessous de la face (2) d'un corps transparent (1) sur laquelle repose une substance (3) à analyser, d'autre part, une source (17) émettant un rayonnement électromagnétique complexe qui est mélangé optiquement au premier rayonnement électromagnétique par l'intermédiaire d'un dispositif optique (18), et, en outre, un coupleur optique (13) de fibres optiques, présentant :
- une voie de transmission en entrée constituée par une fibre optique (7) dont l'extrémité est amincie de manière à former une pointe transparente (6),
- une première voie de transmission en sortie (13a ) reliée à un photodétecteur (8), lui-même relié à un ordinateur (10), à un dispositif à contre-réaction (11), et à un moyen de positionnement vertical nanométrique, tel un tube piezoélectrique (12), assujettissant ladite pointe transparente (6), de manière à la maintenir à une distance constante de la substance transparente (3),
- une seconde voie de transmission en sortie (13b ) reliée, par un dispositif optique (16), à un analyseur de spectres (14).

18 - Microscope optique à balayage en champ évanescent frustré suivant la revendication 14, caractérisé en ce qu'il comporte :

a) une source (4) émettant un premier rayonnement électromagnétique sur le dessous de la face (2) d'un corps transparent (1) sur laquelle repose une substance (3) à analyser,

b) un premier coupleur optique (13) de fibres optiques, présentant :
- une voie de transmission en entrée constituée par une fibre optique (7) dont l'extrémité est amincie de manière à former une pointe transparente (6),
- et une première voie de transmission en sortie (13a ) reliée à un photodétecteur (8), lui-même relié à un ordinateur (10), à un dispositif à contre-réaction (11), et à un moyen de positionnement vertical nanométrique, tel un tube piezoélectrique (12), assujettissant ladite pointe transparente (6), de manière à la maintenir à une distance constante de la substance transparente (3),

c) un second coupleur optique (21) de fibres optiques, présentant :
- une voie de transmission en entrée (21a ) reliée à une seconde voie de transmission en sortie (13b ) dudit coupleur optique (13),
- et une première voie de transmission en sortie (21c ), reliée à un analyseur de spectres (14),

d) une source (20) émettant un rayonnement électromagnétique complexe dans une seconde voie de transmission en sortie (21b ) dudit coupleur optique (21).

19 - Microscope optique à balayage par réflexion en champ proche guidé suivant la revendication 15, caractérisé en ce qu'il comporte :

a) une source (104) émettant un rayonnement électromagnétique dans une première voie de transmission (121b ) en sortie d'un premier coupleur optique (121) à fibres optiques, ce coupleur optique (121) présentant au moins une voie de transmission (121a ) en entrée, et une deuxième voie de transmission (121c ) en sortie,

b) un second coupleur optique (113) à fibres optiques, relié, par l'intermédiaire de sa première voie de transmission (113b ) en sortie, à la voie de transmission (121a ) du premier coupleur optique (121), ce coupleur optique (113) présentant au moins une voie de transmission en entrée constituée par un fibre optique en entrée constituée par une fibre optique (7), dont l'extrémité est étirée de manière à constituer une sonde optique (106) ayant un petit coeur c , et une deuxième voie de transmission (113a ) en sortie,

c) un photodétecteur (8), couplé optiquement à ladite deuxième voie de transmission (113a ), et relié, par ailleurs, à un ordinateur (10), à un dispositif à contre-réaction (11), et à un moyen de positionnement vertical nanométrique, tel un tube piezo-électrique (12), assujettissant ladite sonde optique (106), de manière à la maintenir à une distance constante d'une substance au moins réfléchissante (103), reposant sur la face (102) d'un support (101),

d) un analyseur de spectres (14) relié à la deuxième voie de transmission (121c ) en sortie du premier coupleur optique (121).

20 - Microscope optique à balayage par réflexion en champ proche guidé suivant la revendication 19, caractérisé en ce qu'on intercale un troisième coupleur optique (23) à fibres optiques entre la voie de transmission (121a ) en entrée du premier coupleur optique (121) et la voie de transmission (113b ) en sortie du deuxième coupleur optique (113), de façon que, d'une part, la voie de transmission (23a ) de ce troisième coupleur optique (23) soit relié à ladite voie de transmission (113b ) du coupleur optique (113), d'autre part, une première voie de transmission (23b ) en sortie de ce coupleur optique (23) soit relié à ladite voie de transmission (121a ) du coupleur optique (121), et en outre, une deuxième voie de transmission (23c ) de ce coupleur optique (23) soit relié à une deuxième source (20) émettant un rayonnement électromagnétique complexe dans ladite deuxième voie de transmission (23c ).

21 - Microscope optique à balayage par réflexion en champ proche guidé suivant la revendication 19, caractérisé en ce que, d'une part, on remplace le support (1) par un corps transparent (101), du type d'un prisme, la substance transparente et réfléchissante (3, 103), soumise à l'analyse, reposant alors sur une face (2, 102) dudit corps (1), d'autre part, une source (17) émet un rayonnement électromagnétique complexe sur le dessous de ladite face (2, 102), de manière à générer, sur le dessus de celle-ci, un champ évanescent complexe.

22 - Microscope optique à balayage en champ proche suivant l'une quelconque des revendications 14 ou 15, caractérisé en ce qu'il incorpore une fibre optique (7) fluorescente, associée, le cas échéant, à au moins une microsonde annexe, chargée de capter les rayonnements électromagnétiques ne pouvant pas se propager dans ladite fibre optique (7).

23 - Instruments d'optiques en champ proche destinés à la microscopie et/ou à la spectroscopie d'une substance transparente et/ou réfléchissante incorporant un microscope en champ proche conforme à l'une quelconque des revendications 13 à 22.

Fig 1

Fig 2

*Fig 3*

EP 0 426 571 A1

*Fig 4*

22

Fig 5

*Fig 6*

*Fig 7*

_Fig 8_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0112401 (IBM CORP.) <br> * abrégé * <br> * page 5, ligne 32 - page 7, ligne 24; figures 1, 2 * | 1-5, <br> 13-15 <br> 23 | G02B21/00 <br> G01N21/59 |
| A | | 6-12 | |
| Y | US-A-4500204 (M. OGURA) <br> * abrégé * <br> * colonne 1, lignes 5 - 17 * <br> * colonne 2, ligne 45 - colonne 3, ligne 35 * <br> * colonne 4, lignes 19 - 50 * <br> * colonne 5, lignes 11 - 19 * <br> * colonne 5, lignes 34 - 49 * <br> * colonne 6, lignes 12 - 39 * <br> * figures 1, 2E, 3, 7, 8 * | 1-5, <br> 13-15 <br> 23 | |
| A | | 16-22 | |
| A | US-A-4659429 (M. ISAACSON ET AL.) <br> * colonne 8, lignes 53 - 57 * | 16 | |
| A | US-A-3811777 (BRITTON CHANCE) <br> * colonne 4, lignes 8 - 22 * <br> * colonne 5, lignes 31 - 40 * <br> * figures 1, 4 * | 16-20 | DOMAINES TECHNIQUES RECHERCHES (Int. Cl.5 ) <br><br> G01N <br> G02B |
| A | PROCEEDINGS OF IGARSS '88 SYMPOSIUM <br> septembre 1988, EDIMBOURG, ECOSSE <br> pages 1339 - 1342; C.BUSCHMANN ET AL.: <br> "Correlation of reflectance and chlorophyll fluorescence signatures of healthy and damaged forest trees" <br> * figure 3 * | 16-20 | |
| D,A | PHYSICAL REVIEW, B. CONDENSED MATTER. <br> vol. 39, no. 1, 01 janvier 1989, NEW YORK US <br> pages 767 - 770; R.C. REDDICK ET AL.: <br> "New form of scanning optical microscopy" <br> * le document en entier * | 1-23 | |

Le présent rapport a été établi pour toutes les revendications

| Lieu de la recherche | Date d'achèvement de la recherche | Examinateur |
|---|---|---|
| BERLIN | 14 FEVRIER 1991 | MOUTARD P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P0402)